Europäisches Patentamt

European Patent Office

Office européen des brevets

(11) Numéro de publication: **0 004 398**
A2

(12) **DEMANDE DE BREVET EUROPEEN**

(21) Numéro de dépôt: 79200116.6

(22) Date de dépôt: **08.03.79**

(51) Int. Cl.²: **F 17 D 1/04,** F 17 D 1/02,
F 17 D 1/00, F 17 D 1/14

(30) Priorité: 14.03.78 BE 8762
27.04.78 FR 7812455

(43) Date de publication de la demande: 03.10.79
Bulletin 79/20

(84) Etats contractants désignés: BE CH DE FR GB IT LU
NL SE

(71) Demandeur: **S.A. dite ATELIERS DE CONSTRUCTIONS
ELECTRIQUES DE CHARLEROI(ACEC), 54, Chaussée
de Charleroi, B-1060 Bruxelles (Saint-Gilles) (BE)**

(72) Inventeur: **Fremineur, André, rue de
Dahlem 19, B-4540 Visé (BE)**
Inventeur: **Guiette, Jean-Louis, Avenue du Pic Vert,
37, B-1640 Rhode Ste Genese (BE)**

(74) Mandataire: **Meunier, Marcel et al, ACEC - Service des
Brevets Boîte Postale 4, B-6000 Charleroi (BE)**

(54) Installations de distribution de gaz combustible sous pression.

(57) L'invention est applicable aux installations de distribution de gaz combustible sous pression.

Elle consiste à insérer au moins un échangeur de chaleur W parcouru par le gaz combustible dans le circuit d'alimentation entrée et sortie – d'une turbine de détente T alimentée par le même gaz combustible.

Elle est applicable aux ensembles turbines de détente – génératrices électriques pour la récupération d'énergie.

0004398

## INSTALLATIONS DE DISTRIBUTION DE GAZ COMBUSTIBLE SOUS PRESSION.

La présente invention est relative aux installations de distribution de gaz combustible sous pression.

Il est connu que, dans de telles installations, et plus particulièrement celle destinées à alimenter des utilisateurs industriels, le gaz combustible sous pression, par exemple du gaz naturel, est distribué dans les canalisations principales sous pression élevée, par exemple de l'ordre de 70 bar, et est détendu sur le lieu de son utilisation à une pression de service de l'ordre de 1 bar par exemple.

La détente du gaz sous pression peut être effectuée par exemple par des vannes de détente; dans ce cas, la détente ne produit aucun travail énergétique. On peut aussi effectuer l'opération en détendant le gaz sous pression dans une turbine de détente à circuit ouvert, cette turbine entraînant par exemple une génératrice de courant électrique; dans ce cas, la détente fournit un travailénergétique qui est récupéré.

Il faut cependant remarquer que dans ce dernier cas, la détente du gaz sous pression s'effectue avec refroidissement du gaz de sorte que le gaz doit être ultérieurement réchauffé afin qu'aux endroits de mesure du débit de consommation la température soit ramenée à une valeur acceptable, par exemple de l'ordre de 10°C.

La présente invention a pour objet une installation qui permet de réaliser le but poursuivi ci-dessus sans que le gaz ne soit amené aux endroits de mesure du débit de consommation à une température inacceptable.

Suivant la présente invention, l'installation de distribution de gaz combustible sous pression comprenant au moins une turbine de détente à circuit ouvert entraînant une génératrice de courant électrique et

14.18/1720

alimentée par le gaz combustible est caractérisée en ce qu'au moins un échangeur de chaleur est disposé dans le circuit du gaz combustible pour réchauffer celui-ci de façon que, après détente, le gaz combustible est à une pression et à une température convenables pour la mesure de son débit à l'endroit de son utilisation.

Selon d'autres caractéristiques de la présente invention, l'installation de distribution de gaz combustible sous pression est encore caractérisée en ce qu'au moins un échangeur de chaleur est disposé dans le circuit du gaz combustible:

    a) avant son admission dans la turbine de détente, ou/et

    b) entre deux étages de la turbine de détente, ou/et

    c) à la sortie de la turbine de détente.

La source calorifique alimentant le ou les échangeurs de chaleur peut être avantageusement constituée par le réseau d'eau de refroidissement d'une machine à pertes calorifiques; on réalise de cette façon la récupération des pertes calorifiques d'une ou de plusieurs machines thermiques, par exemple des moteurs à combustion interne ou des turbines à gaz, ainsi que, éventuellement de génératrices de courant électrique associées à ces machines thermiques.

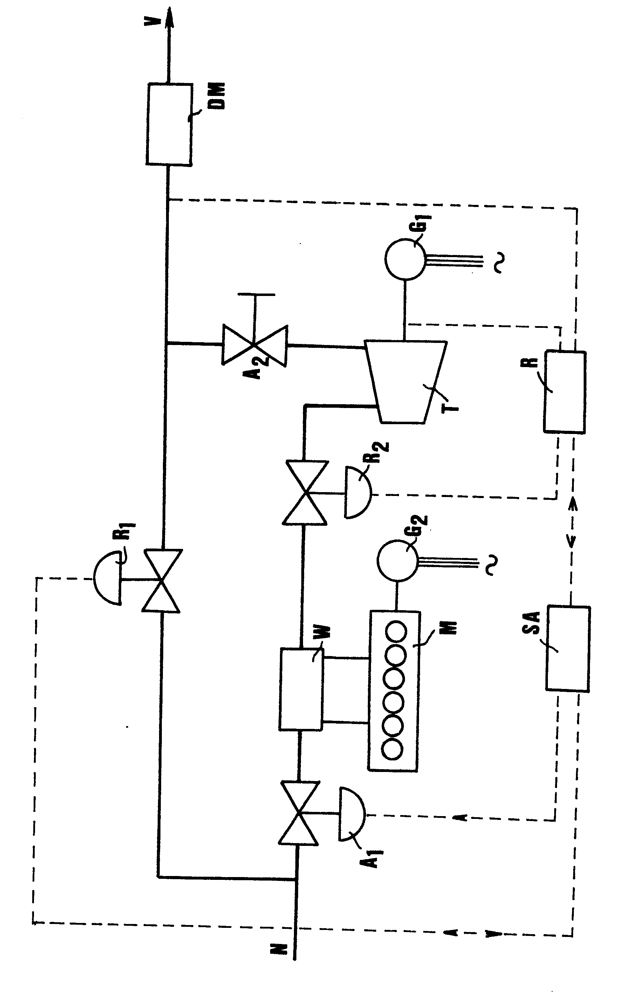

Le dessin annexé représente schématiquement un exemple de réalisation d'installation, suivant la présente invention, dans laquelle on récupère les pertes calorifiques d'une machine thermique, en l'occurrence un moteur à combustion interne.

Sur ce dessin, N représente la canalisation d'alimentation de gaz combustible à pression élevée et V représente la canalisation de distribution de ce même gaz après détente, vers les diverses utilisations. Un premier circuit de détente directe relie directement les canalisations N et V à travers une vanne de distribution $R_1$. Un débimètre DM mesure le débit du gaz consommé par les utilisations.

Un deuxième circuit de détente comprend un échangeur W, une turbine de détente T; il comprend également une vanne de sécurité $A_1$ et une vanne de réglage du circuit de la turbine $R_2$, ainsi qu'une vanne d'isolement $A_2$. La turbine de détente T entraîne une génératrice de courant électrique, par exemple un alternateur $G_1$.

La turbine de détente T est associée à une ou plusieurs machines thermiques N — dont une seule est représentée sur le dessin—, par exemple un moteur à combustion interne, une turbine à gaz, etc., entraînant une génératrice de courant électrique, par exemple un alternateur G2.

L'échangeur de chaleur W est alimenté par les pertes calorifiques de la machine thermique M tandis qu'un système de régulation R et un dispositif d'automaticité SA permet de commander la position des vannes de réglage $R_1$ et $R_2$ ainsi que celle de la vanne de sécurité $A_1$.

La vanne d'isolement $A_2$ sert à isoler le circuit de la turbine de détente T lorsque c'est nécessaire, après fermeture de la vanne de sécurité $A_1$. Cette dernière vanne sert également à interrompre d'urgence le circuit de la turbine de détente, par exemple lors d'une survitesse.

On voit facilement que, par suite du réchauffement du gaz combustible sous pression dans l'échangeur W, ce gaz est amené au débitmètre à une température compatible avec les conditions de mesure.

REVENDICATIONS.

1. Installation de distribution de gaz combustible sous pression comprenant une turbine de détente (T) à circuit ouvert entraînant une génératrice du courant électrique (G₁) et alimentée par le gaz combustible caractérisée en ce qu'au moins un échangeur de chaleur (W) est disposé dans le circuit du gaz combustible pour réchauffer celui-ci de façon que, après détente, le gaz combustible est à une pression et à une température convenables pour la mesure de son débit à l'endroit de son utilisation (DM).

2. Installation de distribution de gaz combustible sous pression suivant la revendication 1 caractérisée en ce qu'au moins un échangeur de chaleur (W) est disposé dans le circuit du gaz combustible avant l'admission de celui-ci dans la turbine de détente (T).

3. Installation de distribution de gaz combustible sous pression suivant la revendication 1 caractérisée en ce qu'au moins un échangeur de chaleur (W) est disposé dans le circuit du gaz combustible entre deux étages de la turbine de détente(T).

4. Installation de distribution de gaz combustible sous pression suivant la revendication 1, caractérisée en ce qu'au moins un échangeur de chaleur (W) est disposé dans le circuit du gaz combustible à la sortie de celui-ci de la turbine de détente(T).

5. Installation de distribution de gaz combustible sous pression suivant une des revendications 1 à 4 caractérisée en ce que l'échangeur de chaleur (W) est alimenté par le réseau d'eau de refroidissement d'une machine à pertes calorifiques(M).

6. Installation de distribution de gaz combustible sous pression suivant la revendication 5 caractérisée en ce que l'échangeur de chaleur (W) est alimenté par les pertes calorifiques d'une machine thermique (M).